# EUROPÄISCHE PATENTANMELDUNG

(11) **EP 4 793 659 A1**
(43) Veröffentlichungstag der Anmeldung: **19.08.2026**
(21) Anmeldenummer: 26156403.3
(22) Anmeldetag: 04.02.2026
(51) Int. Cl.: G01S 7/481, G01S 17/42, G01S 17/89, G01S 17/931, H04N 13/221, H04N 13/239

(54) **SCANVORRICHTUNG SOWIE VERFAHREN FÜR EINE RÄUMLICHE VERMESSUNG EINER UMGEBUNG**

(30) Priorität: 13.02.2025 DE 102025105485
(71) Anmelder: SICK AG, 79183 Waldkirch (DE)
(72) Erfinder: Schneider, Georg, 20535 Hamburg (DE)
(74) Vertreter: Manitz Finsterwald Patent- und Rechtsanwaltspartnerschaft mbB

(57) **Zusammenfassung**

Die vorliegende Erfindung betrifft eine Scanvorrichtung (100) für eine räumliche Vermessung einer Umgebung (200) sowie ein Verfahren für eine räumliche Vermessung einer Umgebung (200) durch die Scanvorrichtung (100), die Scanvorrichtung (200) aufweisend eine LiDAR-Sensoreinheit (10) mit einer Lichtquelle zum Aussenden von Sendelicht (20) in die Umgebung, (200) einer Empfangseinheit (12) zum Empfangen von in der Umgebung (200) remittierten und/oder reflektierten Sendelicht (20) als Empfangslicht (22) sowie einer Auswerteeinheit, (14) wobei die Auswerteeinheit (14) zum Auswerten der durch die Empfangseinheit (12) ermittelten LiDAR-Daten (70) für die räumliche Vermessung der Umgebung (200) ausgebildet ist. Ferner betrifft die Erfindung ein Verfahren für eine räumliche Vermessung einer Umgebung (200) durch eine derartige Scanvorrichtung (100).

## Beschreibung

Die Erfindung betrifft eine Scanvorrichtung für eine räumliche Vermessung einer Umgebung, aufweisend eine LiDAR-Sensoreinheit mit einer Lichtquelle zum Aussenden von Sendelicht in die Umgebung, einer Empfangseinheit zum Empfangen von in der Umgebung remittierten und/oder reflektierten Sendelicht als Empfangslicht sowie einer Auswerteeinheit, wobei die Auswerteeinheit zum Auswerten der durch die Empfangseinheit ermittelten LiDAR-Daten für die räumliche Vermessung der Umgebung ausgebildet ist.

Einer Überwachung einer Umgebung, beispielsweise zur Hinderniserkennung von autonom fahrenden Fahrzeugen, wird zumeist eine räumliche Vermessung zumindest eines Ausschnitts der Umgebung zu Grunde gelegt. Als Scanvorrichtung werden hierfür oftmals LiDAR-Sensoreinheiten (Light detection and ranging) eingesetzt. Objekte in der Umgebung, insbesondere Hindernisse, werden dabei über ein ausgesendetes Lichtsignal, zumeist Laserlicht, und ein entsprechenden Empfangen von in der Umgebung remittierten und/oder reflektierten Teilen dieses Lichtsignals erkannt. Für die Vermessung der Umgebung werden dann über eine Auswertung der empfangenen Lichtsignale, insbesondere von Laufzeiten der Lichtsignale, Entfernungen zu den einzelnen Orten der Remission beziehungsweise Reflexion in der Umgebung bestimmt.

Das Sendelicht, insbesondere wenn es sich um Laserlicht handelt, liegt üblicherweise als Lichtstrahl mit einem kleinen Strahlquerschnitt vor. Im Nahbereich, welcher sich z.B. zwischen einer Entfernung von bis zu 2 Metern Abstand zur Scanvorrichtung erstreckt, besteht allerdings das Problem, dass die Laufzeit der Lichtsignale in der Größenordnung der verwendeten Pulsbreiten der ausgesendeten Lichtsignale liegt, wodurch eine genaue Entfernungsmessung erschwert wird.

Ausgehend von den voranstehend beschriebenen bekannten Scanvorrichtungen ist es daher Aufgabe der vorliegenden Erfindung, Scanvorrichtungen des Standes der Technik zu verbessern. Insbesondere ist es Aufgabe der vorliegenden Erfindung, eine Scanvorrichtung bereitzustellen, die eine verbesserte Vermessung einer Umgebung im Nahbereich ermöglicht.

Die Aufgabe wird gemäß der Erfindung durch eine Scanvorrichtung gemäß dem unabhängigen Anspruch 1 gelöst. Ferner wird die Aufgabe der Erfindung durch ein Verfahren nach Anspruch 15 gelöst. Weiterbildungen der erfindungsgemäßen Scanvorrichtung ergeben sich aus den Unteransprüchen, der Beschreibung und den Zeichnungen.

Gemäß der Erfindung wird die Aufgabe gelöst durch eine Scanvorrichtung für eine räumliche Vermessung einer Umgebung, aufweisend eine LiDAR-Sensoreinheit mit einer Lichtquelle zum Aussenden von Sendelicht in die Umgebung, einer Empfangseinheit zum Empfangen von in der Umgebung remittierten und/oder reflektierten Sendelicht als Empfangslicht sowie einer Auswerteeinheit, wobei die Auswerteeinheit zum Auswerten der durch die Empfangseinheit ermittelten Daten für die räumliche Vermessung der Umgebung ausgebildet ist. Die erfindungsgemäße Scanvorrichtung ist dadurch gekennzeichnet, dass die LiDAR-Sensoreinheit eine um eine Drehachse drehbar gelagerte optische Sensoranordnung mit zwei Sensorabschnitten aufweist, wobei die Sensorabschnitte zueinander beabstandet und bezüglich der Drehachse an unterschiedlichen Positionen angeordnet sind, wobei ein erster der Sensorabschnitte durch optisch sensitive Elemente der Empfangseinheit gebildet ist und die LiDAR-Daten ermittelt, wobei ferner ein zweiter der Sensorabschnitte (44) optische Umgebungs-Daten ermittelt, und wobei die Auswerteeinheit zum Auswerten der Umgebungs-Daten ausgebildet ist, und weiter basierend auf den LiDAR-Daten und den Umgebungs-Daten zum Ermitteln von Stereo-3D-Daten zur Verbesserung der räumlichen Vermessung der Umgebung ausgebildet ist.

Die Erfindung basiert auf der Erkenntnis, dass es durch die Erfassung der Umgebung mittels der zwei Sensorabschnitte möglich ist, die Umgebung aus zwei unterschiedlichen Perspektiven zu erfassen, wobei aus den beiden Perspektiven mittels stereoskopischer Verfahren Abstands- bzw. Tiefeninformationen gewonnen werden können. Die mittels Stereoskopie gewonnenen Abstands- bzw. Tiefeninformationen können dann dazu dienen, Abstands- bzw. Tiefeninformationen der LiDAR-Sensoreinheit zu verbessern, also z.B. zu korrigieren, zu plausibilisieren und/oder zu ersetzen. Die mittels Stereoskopie gewonnenen Abstands- bzw. Tiefeninformationen werden hierin als Stereo-3D-Daten bezeichnet, wobei in die Stereo-3D-Daten bevorzugt die von der Empfangseinheit beziehungsweise dem ersten Sensorabschnitt ermittelten LiDAR-Daten und die von dem zweiten Sensorabschnitt ermittelten Umgebungs-Daten, jeweils zumindest zum Teil, eingehen.

Die erfindungsgemäße Scanvorrichtung weist bevorzugt die üblichen Bauelemente einer LiDAR-Sensoreinheit auf. Eine Lichtquelle, insbesondere eine Laserquelle, stellt ein Sendelicht bereit, insbesondere in Form eines Laserstrahls, das in die zu vermessende Umgebung abgestrahlt wird. Dies erfolgt bevorzugt durch ein Abrastern beziehungsweise Abscannen der zu vermessenden Umgebung mit dem Sendelicht, beispielsweise durch ein Rotieren der gesamten Lichtquelle oder Elementen der Lichtquelle, zum Beispiel eines Ablenkspiegels. Da eine Rotationsposition der Lichtquelle für jeden Zeitpunkt bekannt ist, kann auf diese Weise das Sendelicht kontinuierlich und/oder diskret mit bekannter Winkelkorrelation in die Umgebung ausgesendet werden. Das Rotieren kann durchgehend mit derselben Rotationsrichtung, aber auch oszillierend mit ständig wechselnder Rotationsrichtung erfolgen.

Das ausgesendete Sendelicht trifft in der Umgebung auf Objekte, die sich in unterschiedlicher Entfernung zur erfindungsgemäßen Scanvorrichtung befinden können. Das Sendelicht wird von diesen Objekten remittiert oder an diesen reflektiert. Diese Remission und/oder Reflektion des Sendelichts kann zumindest teilweise in Richtung der erfindungsgemäßen Scanvorrichtung erfolgen, und in dieser dann durch die Empfangseinheit als Empfangslicht registriert werden.

Die durch die Empfangseinheit ermittelten Informationen, beispielsweise eine Laufzeit des empfangenen Empfangslicht, werden im Sinne der Erfindung mit LiDAR-Daten bezeichnet und durch die Auswerteeinheit ausgewertet. Da, wie voranstehend beschrieben, das Sendelicht mit bekannter Winkelkorrelation in die Umgebung ausgesendet wird, kann auch das Empfangslicht eine entsprechend ebenfalls bekannte Winkelkorrelation bezüglich der Umgebung aufweisen. Dies kann bei der Auswertung durch die Auswerteeinheit berücksichtigt werden, und eine Vermessung der Umgebung, also insbesondere eine Bestimmung der Abstände von Objekten in der Umgebung zur Scanvorrichtung, kann dadurch erfolgen.

Die erfindungsgemäße Scanvorrichtung ist dadurch gekennzeichnet, dass die durch die Auswerteeinheit durchgeführte Auswertung zur Vermessung der Umgebung durch ein Hinzuziehen weiterer Informationen verbessert wird. Um diese Informationen bereitzustellen weist die LiDAR-Sensoreinheit der erfindungsgemäßen Scanvorrichtung eine um eine Drehachse drehbar gelagerte optische Sensoranordnung mit zwei Sensorabschnitten auf. Ein Sensorabschnitt im Sinne der Erfindung ist insbesondere ein Bauelement, das optisch sensitiv ist und damit zum Erfassen optischer Informationen ausgebildet ist, beispielsweise ein CMOS-Sensor oder ein CCD-Sensor, aber auch bereits eine einfache (Avalanche-)Fotodiode, ein Fotomultiplier oder ein Fotowiderstand.

Weiter wird ein erster der beiden Sensorabschnitte durch optisch sensitive Elemente der Empfangseinheit gebildet. Mit anderen Worten, der erste Sensorabschnitt ist Teil der LiDAR-Sensoreinheit, die oben bereits beschrieben worden ist, und die zum grundlegenden Vermessen der Umgebung eingesetzt wird. Insbesondere werden durch den ersten Sensorabschnitt die LiDAR-Daten ermittelt, auf denen die durch die LiDAR-Sensoreinheit ermöglichte Vermessung der Umgebung beruht.

Neben dem ersten Sensorabschnitt weist die Sensoranordnung der erfindungsgemäßen Scanvorrichtung einen weiteren, zweiten Sensorabschnitt auf. Auch dieser ist zum Ermitteln von Informationen basierend auf optischen Signalen aus der Umgebung ausgebildet, im Sinne der Erfindung mit Umgebungs-Daten bezeichnet. Die beiden Sensorabschnitte können in ihrer technischen Realisierung gleich oder auch unterschiedlich aufgebaut sein. Insbesondere kann bevorzugt vorgesehen sein, dass die beiden Sensorabschnitte getrennt voneinander auslesbar sind. Die beiden Sensorabschnitte können ferner zeitgleich oder auch zeitlich versetzt ausgelesen werden.

Eine Anordnung der beiden Sensorabschnitte in der Sensoranordnung ist derart vorgesehen, dass die beiden Sensorabschnitte zueinander beabstandet angeordnet sind. Insbesondere sind die beiden Sensorabschnitte, auch durch ihre voranstehend beschriebene beabstandete Anordnung, an verschiedenen Positionen, insbesondere in verschiedenen Abständen, bezüglich der Drehachse der Sensoranordnung positioniert.

Mit anderen Worten, durch diese beabstandete Anordnung zueinander und durch die verschiedenen Positionen bezüglich der Drehachse kann sichergestellt werden, dass die beiden Sensorabschnitte in der Umgebung unterschiedliche Bereiche, insbesondere Winkelbereiche, beobachten, beziehungsweise für optische Signale aus unterschiedlichen Bereichen der Umgebung sensitiv sind. Damit kann erreicht werden, dass die LiDAR-Daten und die Umgebungs-Daten, die jeweils durch einen der beiden Sensorabschnitte ermittelt werden, unterschiedlich sind.

Insbesondere weist jeder der beiden Sensorabschnitte einen eigenen Erfassungsbereich auf. Mit anderen Worten, die Erfassungsbereiche unterscheiden sich und sind insbesondere nicht deckungsgleich. Bevorzugt kann sich der jeweilige Erfassungsbereich entlang einer Blickrichtung beziehungsweise Sensorachse des entsprechenden Sensorabschnitts erstrecken, also entlang dieser Blickrichtung angeordnet und ausgerichtet sein.

Wie bereits ausgeführt ist die Sensoranordnung um eine Drehachse drehbar in der LiDAR-Sensoreinheit und/oder der gesamten erfindungsgemäßen Scanvorrichtung gelagert. Während eines Betriebs der erfindungsgemäßen Scanvorrichtung drehen sich somit die auch die beiden Sensorabschnitte um die Drehachse. Somit kann erreicht werden, dass sich auch die beiden Erfassungsbereiche der Sensorabschnitte mit drehen und dadurch im Laufe der Drehung unterschiedliche Bereiche der Umgebung überstreichen.

Bevorzugt kann die Drehung der Sensoranordnung an den oben beschriebenen Scanvorgang der Lichtquelle angepasst sein, insbesondere synchronisiert sein. Nachdem wie voranstehend beschrieben der erste Sensorabschnitt Teil der LiDAR-Sensoreinheit ist, kann auf diese Weise sichergestellt werden, dass der erste Sensorabschnitt seine Funktion als optisch sensitives Element der Empfangseinheit ausfüllen kann. Bevorzugt ist der erste Sensorabschnitt in der Sensoranordnung derart positioniert und deren Drehung auf den Scanvorgang der Lichtquelle derart angepasst, dass der durch die Lichtquelle ausgeleuchtete Winkelbereich der Umgebung durch den ersten Sensorabschnitt zumindest teilweise, insbesondere vollständig, beobachtet werden kann.

Gleichzeitig kann durch die Drehung der Sensoranordnung erreicht werden, dass derselbe Bereich in der Umgebung durch jeden der beiden Sensorabschnitte vermessen werden kann, nämlich bei einem ersten Drehwinkel durch den ersten Sensorabschnitt und bei einem zweiten Drehwinkel durch den zweiten Sensorabschnitt. Mit anderen Worten, ein Bereich in der Umgebung, der zu einem ersten Zeitpunkt der Drehung beziehungsweise bei einer ersten Drehposition der Sensoranordnung durch den ersten Sensorabschnitt vermessen wird, kann zu einem zweiten Zeitpunkt der Drehung beziehungsweise bei einer zweiten Drehposition der Sensoranordnung durch den zweiten Sensorabschnitt vermessen werden, wenn sich die Sensoranordnung entsprechend weitergedreht hat.

Auf diese Weise kann erreicht werden, dass für den zu vermessenden Bereich der Umgebung sowohl vom ersten Sensorabschnitt ermittelte LiDAR-Daten als auch vom zweiten Sensorabschnitt ermittelte Umgebungs-Daten vorliegen. Da die beiden Sensorabschnitte, wie oben beschrieben, zum einen unterschiedliche und insbesondere unterschiedlich ausgerichtete Empfangsbereiche aufweisen und zum anderen für einen jeweiligen Ausschnitt des zu vermessenden Bereichs der Umgebung bei unterschiedlichen Drehwinkeln der Sensoranordnung sensitiv sind, sind für jeden Ausschnitt des zu vermessenden Bereichs der Umgebung die entsprechenden LiDAR-Daten und Umgebungs-Daten aus verschiedenen Perspektiven aufgenommen. LiDAR- beziehungsweise Umgebungs-Daten, die vom selben Objekt in der Umgebung stammen, sind insbesondere unterschiedlich, beispielsweise durch einen zumindest leicht anderen Blickwinkel der beiden Sensorabschnitte auf das entsprechende Objekt. Auf diese Weise lassen sich in der durch die Auswerteeinheit durchgeführten Auswertung Methoden der stereografischen Projektion anwenden um Stereo-3D-Daten zu ermitteln.

Je nach Entfernung eines Objekts in der Umgebung ändert sich ein Versatz der diesem Objekt entsprechenden und durch die beiden Sensorabschnitte ermittelten LiDAR- beziehungsweise Umgebungs-Daten. Aus diesem Versatz und den bekannten Eigenschaften der erfindungsgemäßen Scanvorrichtung, insbesondere Position und Ausrichtung der Sensorabschnitte und deren jeweiligen Empfangsbereich, können Stereo-3D-Daten, welche beispielsweise eine Entfernung des jeweiligen Objekts von der erfindungsgemäßen Scanvorrichtung angeben und/oder umfassen. Insbesondere ist die Auswerteeinheit dazu ausgebildet, durch diese durch die Stereo-3D-Daten bereitgestellten zusätzlichen Informationen die allein durch die üblichen Elemente der LiDAR-Sensoreinheit ermöglichte räumliche Vermessung der Umgebung zu verbessern.

Die auf diese Weise ermittelten Stereo-3D-Daten können insbesondere Abstände von Objekten beziehungsweise eigenständig identifizierbaren Abschnitten von Objekten, wie beispielsweise Ecken, Kanten oder dergleichen, umfassen. Diese aus den Stereo-3D-Daten gewonnenen Stereo-Abstände sind ferner insbesondere zusätzlich zu den rein von der LiDAR-Sensoreinheit ermittelten LiDAR-Abständen verfügbar. Eine Verbesserung der Vermessung der Umgebung kann somit insbesondere dadurch erfolgen, dass für Objekte oder Abschnitte von Objekten, für die jeweils Werte von beiden Abstandsermittlungen vorliegen, ein tatsächlich als Ergebnis der Vermessung ausgegebener Abstand basierend auf beiden ermittelten Roh-Abstandswerten, also den jeweiligen Werten des LiDAR-Abstands und des Stereo-Abstands, bestimmt wird.

Für die Verbesserung der Vermessung kann beispielsweise ein, eventuell gewichteter, Mittelwert aus entsprechenden LiDAR-Abständen und Stereo-Abständen gebildet werden. Die LiDAR-Abstände können dementsprechend durch entsprechende Stereo-Abstände korrigiert werden. Bei der Ermittlung kann auch eine Plausibilitätsprüfung erfolgen, beispielsweise ob ein Wert eines ermittelten LiDAR-Abstands zumindest innerhalb einer festgelegten Fehlertoleranz mit dem Wert eines zugehörig ermittelten Stereo-Abstands übereinstimmt.

Die Verbesserung der räumlichen Vermessung kann auch umfassen, dass ermittelte Werte von LiDAR-Abständen durch Werte entsprechend ermittelter Stereo-Abstände ersetzt werden.

Die Verbesserung kann dabei jeweils für einzelne Abstandswerte, für Abstandswerte für ein ganzes Objekt oder sämtliche Abstandswerte erfolgen.

Auch kann die Auswerteeinheit ausgebildet sein, die Verbesserung, insbesondere nur, dann vorzunehmen, wenn eine Signalstärke (des Empfangslichts) und/oder ein Verhältnis eines Messsignals zum Rauschen (SNR - signal to noise ratio) (des Empfangslichts) in der Empfangseinheit der LiDAR-Sensoreinheit, einen vorbestimmten Schwellenwert unterschreitet. Alternativ oder zusätzlich kann die Auswerteeinheit auch ausgebildet sein, die Verbesserung, insbesondere nur, dann vorzunehmen, wenn eine Signalstärke (des Empfangslichts) in der Empfangseinheit der LiDAR-Sensoreinheit, einen vorbestimmten Schwellenwert überschreitet.

Insbesondere ein Überschreiten einer bestimmten Signalstärke und ein Unterschreiten eines bestimmten SNRs deuten darauf hin, dass die LiDAR-Sensoreinheit eine Messung im Nahbereich vornimmt, welche gut durch die Stereo-3D-Daten verbessert werden kann.

Weiter Alternativ oder zusätzlich kann die Auswerteeinheit auch ausgebildet sein, die Verbesserung, insbesondere nur, dann vorzunehmen, wenn ein durch die LiDAR-Sensoreinheit ermittelter LiDAR-Abstand und/oder ein in den Stereo-3D-Daten enthaltener Stereo-Abstand einen vorbestimmten Abstandsschwellenwert unterschreitet. Der Abstandsschwellenwert kann beispielsweise 5m, 3m, 2m oder 1m betragen. Auch auf diese Weise kann erkannt werden, dass eine Messung im Nahbereich erfolgt, woraufhin dann die Verbesserung angestoßen wird.

Der oben beschriebene Versatz der durch die beiden Sensorabschnitte ermittelten LiDAR-Daten beziehungsweise Umgebungs-Daten ist insbesondere umso größer, je näher das entsprechend detektierte Objekt in der Umgebung zur erfindungsgemäßen Scanvorrichtung ist. Entsprechend sind die durch die Auswerteeinheit ermittelten Stereo-3D-Daten für Objekte nahe der Scanvorrichtung, also im so genannten Nahbereich, genauer und aussagekräftiger als für weiter entfernte Objekte. Wie oben dargelegt ist jedoch genau im Nahbereich die räumliche Vermessung durch reines LiDAR weniger genau. Mit anderen Worten, die zusätzlich mögliche Ermittlung und Berücksichtigung von Stereo-3D-Daten ermöglicht in der erfindungsgemäßen Scanvorrichtung insbesondere eine Nahfeldkorrektur, also eine Verbesserung der räumlichen Vermessung in einem Bereich nahe der Scanvorrichtung, im Sinne der Erfindung beispielsweise in einem Distanzbereich von 0 m bis 1-2 m zur Scanvorrichtung.

Voranstehend wurde die erfindungsgemäße Scanvorrichtung mit einer Sensoranordnung mit zwei Sensorabschnitten beschrieben. Die erfindungsgemäße Scanvorrichtung ist jedoch nicht auf diese Anzahl an Sensorabschnitten beschränkt. So kann die entsprechende Sensoranordnung auch drei oder mehr Sensorabschnitte aufweisen, wobei jedoch zumindest ein Paar dieser drei oder mehr Sensorabschnitte die voranstehend beschriebenen Eigenschaften des ersten und zweiten Sensorabschnitt aufweist.

Weiter kann die erfindungsgemäße Scanvorrichtung dadurch gekennzeichnet sein, dass jeweilige Blickrichtungen der beiden Sensorabschnitte, entlang der der jeweilige Sensorabschnitt sensitiv ist, einen Winkel Δα, bevorzugt einen Winkel Δα zwischen 15° und 45°, einschließen. Auf diese Weise kann sichergestellt werden, dass die Empfangsbereiche der beiden Sensorabschnitte, die, wie voranstehend beschrieben, sich jeweils entlang der Blickrichtung erstrecken können, ausreichend unterschiedlich sind. Durch einen Winkel Δα zwischen diesen Blickrichtungen kann besonders einfach sichergestellt werden, dass die beiden Empfangsbereiche unterschiedlich sind. Ein Winkel Δα zwischen 15° und 45° hat sich als besonders guter Kompromiss herausgestellt, um einerseits die Empfangsbereiche ausreichend unterschiedlich bereitzustellen, und andererseits keine zu großen Drehwinkel der Sensoranordnung zu erfordern, um denselben Bereich in der zu vermessenden Umgebung mit beiden Sensorabschnitten zu erfassen.

Da die Blickrichtungen einen Winkel Δα einschließen, schneiden sich die beiden Blickrichtungen. Hierbei ist einerseits bevorzugt, dass die beiden Blickrichtungen zusammen in einer gemeinsamen Blickebene angeordnet sind. Zum anderen ist alternativ oder zusätzlich bevorzugt, dass sich die beiden Blickrichtungen vor den Sensorabschnitten schneiden, also in Richtung der zu vermessenden Umgebung. Dies ermöglicht beispielsweise einen besonders kompakten Aufbau der Scanvorrichtung.

Gemäß einer Weiterentwicklung der erfindungsgemäßen Scanvorrichtung kann ferner vorgesehen sein, dass die Blickrichtung wenigstens eines der Sensorabschnitte quer zur Drehachse ausgerichtet ist, bevorzugt die Blickrichtungen beider Sensorabschnitte quer zur Drehachse ausgerichtet sind. Durch eine Ausrichtung der Blickrichtung eines oder beider Sensorabschnitte quer zur Drehachse kann eine besonders eindeutige und einfache geometrische Bestimmung des Empfangsbereichs des entsprechenden Sensorabschnitts in der zu vermessenden Umgebung erreicht werden. Eine Rekonstruktion dieses Empfangsbereichs während der Auswertung der durch den jeweiligen Sensorabschnitt ermittelten Messdaten durch die Auswerteeinheit kann dadurch erleichtert werden.

Auch kann die erfindungsgemäße Scanvorrichtung dadurch weiterentwickelt sein, dass die beiden Blickrichtungen während der Drehbewegung der Sensoranordnung jeweils einen Sensorbereich überstreichen, wobei die beiden Sensorbereiche zu einem Scanbereich der Scanvorrichtung von 60°, insbesondere 180°, bevorzugt 360°, überlappen. Jeder der beiden Sensorabschnitte überstreicht mit seiner Blickrichtung einen Sensorbereich in der Umgebung, und in diesem Sensorbereich können durch den jeweiligen Sensorabschnitt Daten, also LiDAR-Daten beziehungsweise Umgebungs-Daten, ermittelt werden. Der Scanbereich als Überschneidungsbereich der beiden Sensorbereiche stellt also denjenigen Teil der Umgebung dar, für den sowohl LiDAR-Daten als auch Umgebungs-Daten vorliegen. Für diesen Scanbereich können somit die auf den durch den ersten Sensorabschnitt ermittelten LiDAR-Daten basierende Vermessung der Umgebung durch die unter zusätzlicher Verwendung der Umgebungs-Daten des zweiten Sensorabschnitts ermittelten Stereo-3D-Daten verbessert werden.

Ein Scanbereich von 60° ermöglicht insbesondere, eine Umgebung vor der Scanvorrichtung verbessert zu vermessen, beispielsweise um Objekte in Fahrtrichtung eines Fahrzeugs zu erkennen. Größere Scanbereiche, beispielsweise 180°, ermöglichen eine bessere Übersicht über die Umgebung, wobei ein Scanbereich von 360° eine Rundumsicht bereitstellt.

Ferner kann die erfindungsgemäße Scanvorrichtung dahingehend ausgebildet sein, dass während der Drehbewegung der Sensoranordnung die beiden Sensorabschnitte jeweils eine Vielzahl an Einzelaufnahmen als LiDAR-Daten und Umgebungs-Daten ermitteln, wobei die Auswerteeinheit zum Erzeugen eines ersten Eingangsbild aus den Einzelaufnahmen des ersten Sensorabschnitts sowie zum Erzeugen eines zweiten Eingangsbild aus den Einzelaufnahmen des zweiten Sensorabschnitts ausgebildet ist, und wobei die Auswerteeinheit zum Erzeugen eines Ausgangsbilds aus dem ersten Eingangsbild und dem zweiten Eingangsbild ausgebildet ist. Mit anderen Worten, während der Drehbewegung der Sensoranordnung werden für verschiedene Winkelstellungen jeweils Daten ermittelt, insbesondere für jede dieser Winkelstellungen eine Einzelaufnahme aufgenommen. Bevorzugt kann vorgesehen sein, dass die jeweiligen Empfangsbereiche der Sensorabschnitte und ein Winkelinkrement zwischen den einzelnen Winkelstellungen derart aufeinander abgestimmt sind, dass sich die Bereiche der Umgebung, die in den Einzelaufnahmen abgelichtet werden, überlappungsfrei sind.

Durch eine Zusammenschau der Einzelaufnahmen, das durch die Auswerteeinheit erzeugt wird, ergibt sich dann ein Eingangsbild des gesamten Sensorbereichs des jeweiligen Sensorabschnitts. Durch die Einzelaufnahmen kann dieses Eingangsbild insbesondere bereitgestellt werden, ohne für jede Drehstellung der Sensoranordnung ein Abbild des gesamten Sensorbereichs erzeugen zu müssen.

Insbesondere kann hierbei das Eingangsbild des ersten Sensorabschnitts LiDAR-Daten, insbesondere die ermittelten LiDAR-Abstände, darstellen beziehungsweise diese umfassen. Das Eingangsbild des zweiten Sensorabschnitts kann, je nach Ausgestaltung des zweiten Sensorabschnitts, beispielsweise ein ein- oder zweidimensionales Abbild der Umgebung umfassen.

Anschließend werden aus den beiden Eingangsbildern der beiden Sensorabschnitte durch die Auswerteeinheit ein Ausgangsbild erzeugt. Hierzu werden in demjenigen Drehwinkelbereich, in dem beide Eingangsbilder vorliegen, die Informationen dieser beiden Eingangsbilder verwendet, um das Ausgangsbild zu erzeugen. Das Ausgangsbild kann dadurch bevorzugt insbesondere für den oben beschriebenen Scanbereich der erfindungsgemäßen Scanvorrichtung erzeugt werden.

Für die Erzeugung des Ausgangsbilds gibt es verschiedene Möglichkeiten. Beispielsweise kann eine durch das Eingangsbild des zweiten Sensorabschnitts vorhandene Abbildung der Umgebung durch zusätzliche Darstellung von auf den LiDAR-Daten des ersten Sensorabschnitts basierenden LiDAR-Abständen ergänzt werden. Weiter ist auch eine Darstellung von Stereo-Abständen, die wie voranstehend bereits ausgeführt durch eine Auswertung basierend sowohl auf den LiDAR-Daten des ersten Sensorabschnitts als auch der Umgebungs-Daten des zweiten Sensorabschnitts ermittelt werden, im Eingangsbild des zweiten Sensorabschnitts als Ausgangsbild denkbar. Insbesondere kann das Ausgangsbild auch die voranstehend bereits beschriebene Verbesserung der Vermessung der Umgebung, bei der insbesondere Abstände zu Objekten in der Umgebung durch Zusammenschau von LiDAR-Abständen und Stereo-Abständen verbessert sind, umfassen.

Die voranstehend beschriebenen Beispiele stellen keine abschließende Beschreibung der möglichen Ausgestaltungen des Ausgangsbilds dar.

Sowohl die Eingangsbilder als auch das Ausgangsbild können in ausschließlich computerlesbarer Form vorliegen. Zusätzlich kann auch eine menschenlesbare Anzeige der Eingangsbilder und/oder des Ausgangsbilds erzeugt werden, beispielsweise für eine Anzeige auf einem Monitor oder einer Datenbrille.

Die erfindungsgemäße Scanvorrichtung kann ferner dahingehend weiterentwickelt sein, dass das Ausgangsbild die durch die ermittelten Stereo-3D-Daten verbesserte Vermessung der Umgebung umfasst, bevorzugt dass das Ausgangsbild der durch die ermittelten Stereo-3D-Daten verbesserte Vermessung der Umgebung entspricht. Gemäß dieser Weiterentwicklung enthält somit das Ausgangsbild durch die Berücksichtigung beider Sensorabschnitte die verbesserte räumliche Vermessung, bevorzugt enthält es diese sogar ausschließlich. Erneut kann hierbei das Ausgangsbild bevorzugt insbesondere für den oben beschriebenen Scanbereich der erfindungsgemäßen Scanvorrichtung erzeugt werden. Mit anderen Worten, als Ergebnis eines Betriebs der erfindungsgemäßen Scanvorrichtung erhält man Ausgangsbilder, in der eine durch Stereo-3D-Daten verbesserte räumliche Vermessung der Umgebung abgebildet ist.

Weiter kann die erfindungsgemäße Scanvorrichtung dahingehend weiterentwickelt sein, dass die Scanvorrichtung eine mit der Auswerteeinheit datenkommunizierende Ausgabeschnittstelle zum Ausgeben des ersten Eingangsbilds und/oder des zweiten Eingangsbilds und/oder des Ausgangsbilds aufweist. Durch eine derartige Ausgabeschnittstelle kann eine Weiter- und/oder Wiedergabe der Eingangsbilder beziehungsweise des Ausgangsbilds ermöglicht werden. Eine Ausgabeschnittstelle im Sinne der Erfindung kann bereits eine Steckerverbindung für eine entsprechend vorgesehene Datenleitung sein. Bevorzugt kann eine Ausgabeschnittstelle jedoch auch eine tatsächliche optische Darstellung des jeweiligen Bildes umfassen, beispielsweise durch eine Ausgestaltung der Ausgabeschnittstelle als Display oder Datenbrille.

Darüber hinaus kann die erfindungsgemäße Scanvorrichtung dadurch gekennzeichnet sein, dass ein optisch sensitiver Bereich der beiden Sensorabschnitte jeweils einem einzelnen Bildpunkt entspricht. Ein derartiger Bildpunkt kann auch als Pixel bezeichnet werden. Bevorzugt wird durch den entsprechenden Sensorabschnitt ein begrenzter Bereich der Umgebung beobachtet, insbesondere ein Bereich direkt um die Blickrichtung des Sensorabschnitts. Bei der oben beschriebenen Ausführungsform, in der während der Drehbewegung der Sensoranordnung eine Vielzahl an Einzelbildern aufgenommen werden, ergeben sich hierbei sowohl für die Eingangsbilder der beiden Sensorabschnitte als auch für das Ausgangsbild ein Linienbild der Umgebung.

Alternativ kann bei der erfindungsgemäßen Scanvorrichtung vorgesehen sein, dass ein optisch sensitiver Bereich der beiden Sensorabschnitte jeweils einer Spalte an Bildpunkten entsprechen, wobei die Bildpunkte in der Spalte entlang einer Längserstreckung angeordnet sind, und wobei bevorzugt die Längserstreckung der jeweiligen Spalte parallel zur Drehachse der Sensoranordnung ausgerichtet ist. Nun ergeben sich bei der oben beschriebenen Ausführungsform, in der während der Drehbewegung der Sensoranordnung eine Vielzahl an Einzelbildern aufgenommen werden, sowohl für die Eingangsbilder der beiden Sensorabschnitte als auch für das Ausgangsbild jeweils ein zweidimensionales Bild in der Umgebung.

Darüber hinaus kann die erfindungsgemäße Scanvorrichtung auch dahingehend ausgebildet sein, dass der zweite Sensorabschnitt als Bestandteil einer der folgenden Sensoreinheiten ausgebildet ist:
- Bestandteil einer LiDAR-Sensoreinheit
- Bestandteil einer Hintergrundlichtmesseinheit

Diese Liste ist nicht abgeschlossen, und es sind insbesondere auch andere Sensoreinheiten als Grundlage für den zweiten Sensorabschnitt denkbar.

Die LiDAR-Sensoreinheit, dessen Bestandteil der zweite Sensorabschnitt ist, kann hierbei diejenige LiDAR-Sensoreinheit sein, die bereits den ersten Sensorabschnitt umfasst, oder aber auch eine vollständig eigenständige LiDAR-Sensoreinheit. In dieser Ausgestaltung der erfindungsgemäßen Scanvorrichtung liegen daher auch die Umgebungs-Daten des zweiten Sensorabschnitts als LiDAR-Daten vor. Somit können unter Verwendung von LiDAR-Daten beider Sensorabschnitte jeweils Abstände von Objekten in der Umgebung ermittelt werden, die dann zusammen insgesamt, beispielsweise durch die oben bereits beschriebenen Verfahren einer Mittelwertbildung oder einer Plausibilitätsprüfung, eine Verbesserung der Vermessung der Umgebung ermöglichen.

Eine Hintergrundlichtmesseinheit wiederum kann beispielsweise einen Kamerachip einer elektronischen Kamera umfassen. In dieser Ausgestaltung der erfindungsgemäßen Scanvorrichtung können über den ersten Sensorabschnitt als Teil der LiDAR-Sensoreinheit LiDAR-Abstände zu Objekten in der Umgebung ermittelt werden. Der zweite Sensorabschnitt ermöglicht die Erfassung der Umgebung als 2D-Abbild, wobei sich dann, aufgrund der wie voranstehend bereits ausgeführt, unterschiedlichen Blickwinkel der beiden Sensorabschnitte durch Stereografie Stereo-Abstände ermitteln lassen. Auch in dieser Ausgestaltung ist insgesamt, beispielsweise durch die oben bereits beschriebenen Verfahren einer Mittelwertbildung oder einer Plausibilitätsprüfung, eine Verbesserung der Vermessung der Umgebung ermöglicht werden.

Auch kann die erfindungsgemäße Scanvorrichtung dadurch gekennzeichnet sein, dass die Sensorabschnitte parallel zur Drehachse der Sensoranordnung vertikal beabstandet angeordnet sind. Mit anderen Worten, wenn die beiden Sensorabschnitte in der Umgebung denselben Bereich vermessen, ergibt sich durch den Höhenunterschied, der sich durch die vertikale Beabstandung der beiden Sensorabschnitte parallel zur Drehachse ergibt, ein zusätzlicher Unterschied im Blickwinkel, unter der der jeweilige Sensorabschnitt die Umgebung vermisst. Dieser zusätzliche Unterschied im Blickwinkel kann bei der Auswertung durch die Auswerteeinheit berücksichtigt werden, um die Verbesserung der räumlichen Vermessung der Umgebung weiter zu steigern.

Ferner kann die erfindungsgemäße Scanvorrichtung dahingehend ausgebildet sein, dass die Sensoranordnung ein optisches Sensorelement aufweist, wobei die Sensorabschnitte als geometrisch beabstandete Abschnitte des Sensorelements ausgebildet sind, oder dass die Sensoranordnung zwei geometrische getrennte optische Sensorelemente aufweist, wobei jedes Sensorelement einen der Sensorabschnitte umfasst.

In dieser Ausgestaltungsform der erfindungsgemäßen Scanvorrichtung kann einerseits vorgesehen sein, dass nur ein einziges optisches Sensorelement eingesetzt ist, um beide Sensorabschnitte bereitzustellen. Auf diese Weise kann beispielsweise auf eine doppelte Ausleseelektronik verzichtet werden. Insbesondere für Ausgestaltungen, bei denen die beiden Sensorabschnitte technisch gleich oder ausgebildet sind, kann dies von Vorteil sein.

Alternativ kann vorgesehen sein, für jeden der beiden Sensorabschnitte ein eigenes, getrenntes Sensorelement vorzusehen. Insbesondere kann dadurch ermöglicht werden, für jeden der beiden Sensorabschnitte ein eigenes, technisch unterschiedliches Sensorelement einzusetzen. Eine besonders variable und an verschiedenste Anforderungen anpassbare Ausgestaltung einer Sensoranordnung für die erfindungsgemäße Scanvorrichtung kann hierdurch ermöglicht werden.

In beiden Ausgestaltungen können die eingesetzten Sensorelemente als diskrete Bauteile oder integrierte Bauteile, insbesondere vollintegrierte Bauteile, vorgesehen sein.

Auch kann die erfindungsgemäße Scanvorrichtung dadurch gekennzeichnet sein, dass die Sensoranordnung eine gemeinsame Sensoroptik für die Sensorabschnitte aufweist, oder dass die Sensoranordnung für jeden der Sensorabschnitte eine eigene Sensoroptik aufweist. Durch die Sensoroptik wird die zu vermessende Umgebung, insbesondere derjenige Bereich der Umgebung, der durch den Empfangsbereich des jeweiligen Sensorabschnitts vermessen werden kann, auf den entsprechenden Sensorabschnitt abgebildet werden. Eine einzige, gemeinsame Sensoroptik ermöglicht insbesondere, die gesamte Sensoranordnung besonders kompakt aufzubauen. Zwei getrennte Sensoroptiken hingegen können eingesetzt werden, um für jeden der beiden Sensorabschnitte eine angepasste und bedarfsgerechte Abbildung der Umgebung zu ermöglichen.

Ferner kann die erfindungsgemäße Scanvorrichtung dadurch gekennzeichnet sein, dass die Sensorabschnitte auf verschiedenen Seiten der Drehachse positioniert sind, bevorzugt dass die Sensorabschnitte in Bezug auf die Drehachse symmetrisch positioniert sind. Wie voranstehend bereits ausgeführt, liegt der Bestimmung der Stereo-3D-Daten insbesondere ein Unterschied im Blickwinkel der beiden Sensorabschnitte auf die zu vermessende Umgebung zu Grunde. Durch eine Anordnung der beiden Sensorabschnitte auf verschiedenen Seiten in Bezug auf die Drehachse kann, bei gleichbleibenden äußeren Abmessungen der erfindungsgemäßen Scanvorrichtung, ein besonders großer Abstand zwischen den Sensorabschnitten erreicht werden. Eine symmetrische Anordnung der beiden Sensorabschnitte wiederum ermöglicht eine Vereinfachung der Auswertung der ermittelten LiDAR- und Umgebungs-Daten.

Weiter wird die Aufgabe durch ein Verfahren für eine räumliche Vermessung einer Umgebung gelöst, wobei das erfindungsgemäße Verfahren durch eine Scanvorrichtung gemäß der Erfindung ausgeführt wird. Das erfindungsgemäße Verfahren ist dadurch gekennzeichnet, durch die LiDAR-Sensoreinheit der Scanvorrichtung LiDAR-Daten erfasst und basierend auf diesen LiDAR-Daten eine räumliche Vermessung der Umgebung vorgenommen wird, wobei zusätzlich durch den zweiten Sensorabschnitt der Scanvorrichtung optische Umgebungs-Daten der Umgebung erfasst werden und durch die Auswerteeinheit der Scanvorrichtung basierend auf den LiDAR-Daten und diesen zusätzlichen Umgebungs-Daten des zweiten Sensorabschnitts Stereo-3D-Daten ermittelt werden, und wobei durch die Auswerteeinheit die Vermessung der Umgebung durch Berücksichtigung dieser Stereo-3D-Daten verbessert.

Das erfindungsgemäße Verfahren wird durch die erfindungsgemäße Scanvorrichtung durchgeführt. Sämtliche Merkmale und Vorteile, die voranstehend mit Bezug auf die erfindungsgemäße Scanvorrichtung beschrieben wurden, können somit auch durch das erfindungsgemäße Verfahren ermöglicht werden.

Im Folgenden werden Ausführungsformen der erfindungsgemäßen Scanvorrichtung anhand von schematischen Figuren beispielhaft beschrieben. Es zeigen im Einzelnen
- Fig. 1: Eine erfindungsgemäße Scanvorrichtung beim Scannen einer Umgebung, und
- Fig. 2: Eine Darstellung der in Fig. 1 durch die erfindungsgemäße Scanvorrichtung ermittelten LiDAR- beziehungsweise Umgebungs-Daten.

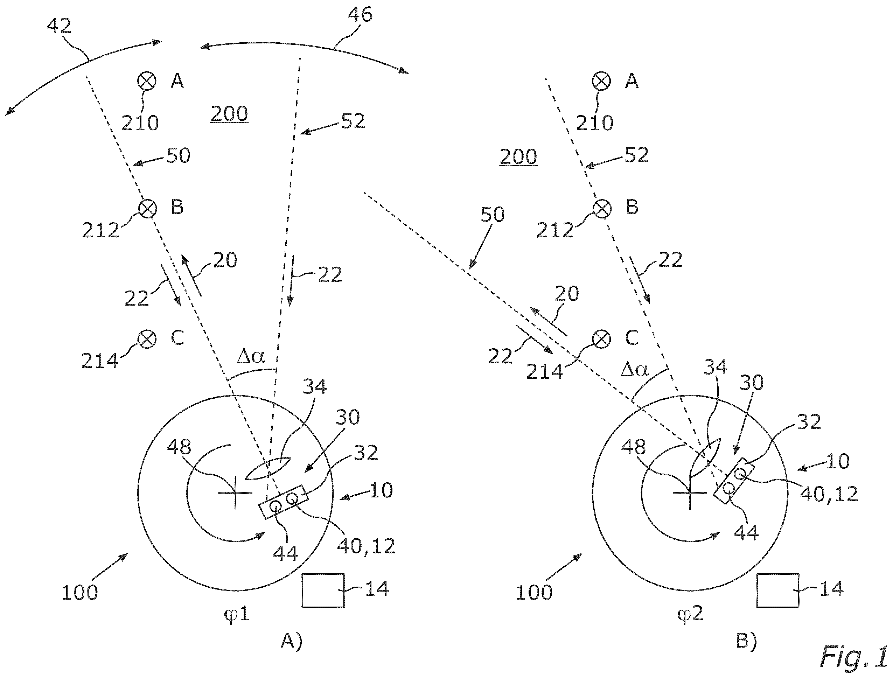

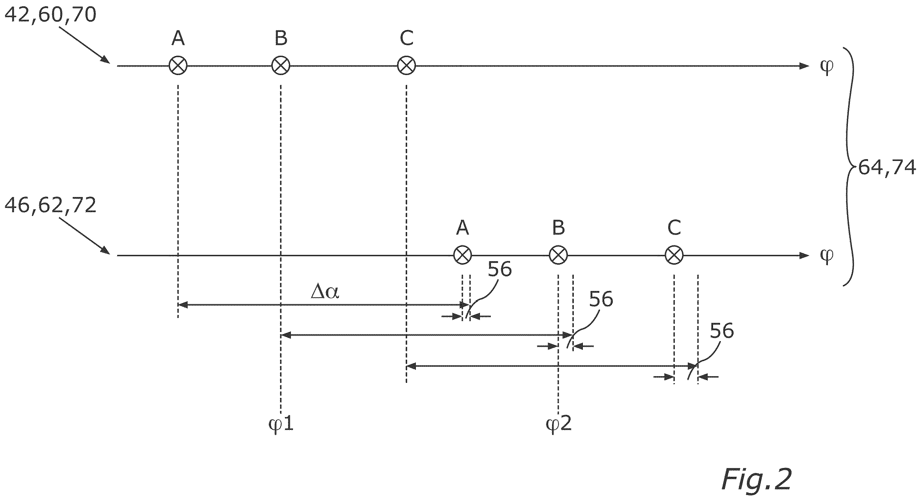

Anhand der Fig. 1, 2 wird schematisch eine erfindungsgemäße Scanvorrichtung 100 und deren Funktionsweise dargestellt. Die erfindungsgemäße Scanvorrichtung 100 ist hierbei insbesondere zum Ausführen des erfindungsgemäßen Verfahrens ausgebildet. Im Folgenden werden daher die Fig. 1, 2 gemeinsam beschrieben. Die erfindungsgemäße Scanvorrichtung 100 ist beim räumlichen Vermessen einer Umgebung 200 dargestellt, in der drei Objekte 210, 212, 214 vorhanden sind.

Die erfindungsgemäße Scanvorrichtung 100 weist insbesondere eine LiDAR-Sensoreinheit 10 auf, die zum grundsätzlichen räumlichen Vermessen der Umgebung 200 befähigt ist. Dafür weist die LiDAR-Sensoreinheit 10 eine nicht dargestellte Lichtquelle zum Aussenden von Sendelicht 20 auf, das in der Umgebung 200, insbesondere an in der Umgebung 200 vorhandenen Objekten 210, 212, 214 reflektiert oder von diesen remittiert, und dann als Empfangslicht 22 von einer Empfangseinheit 12, insbesondere dem ersten Sensorabschnitt 40, der LiDAR-Sensoreinheit 10 detektiert wird. Eine Auswerteeinheit 14, die ebenfalls Teil der LiDAR-Sensoreinheit 10 ist, wertet die durch die Empfangseinheit 12 ermittelten LiDAR-Daten 70 (vgl. Fig. 2) aus und stellt als Ergebnis die räumliche Vermessung der Umgebung 200 bereit.

Insbesondere in einem Nahbereich um die erfindungsgemäße Scanvorrichtung 100, beispielsweise in einem Abstand bis zu 2 m um die Scanvorrichtung 100, stößt jedoch eine Auflösung der verwendeten LiDAR-Sensoreinheit 10 an ihre Grenzen. Erfindungsgemäß ist daher vorgesehen, durch weitere Messungen eine Verbesserung der räumlichen Vermessung der Umgebung 200 zu erreichen.

Insbesondere weise die LiDAR-Sensoreinheit 10 eine Sensoranordnung 30 auf, die um eine Drehachse 48 drehbar in der LiDAR-Sensoreinheit 10 beziehungsweise der Scanvorrichtung 100 gelagert ist. Diese Sensoranordnung 30 weist neben dem oben bereits angeführten ersten Sensorabschnitt 40 einen weiteren optisch sensitiven zweiten Sensorabschnitt 44 auf, wobei, wie bereits beschrieben, der erste Sensorabschnitt 40 durch optisch sensitive Elemente der Empfangseinheit 12 gebildet ist. Der zweite Sensorabschnitt 44 kann beispielsweise ebenfalls Teil einer weiteren LiDAR-Sensoreinheit oder alternativ Teil einer Hintergrundlichtmesseinheit sein.

Wie dargestellt kann die Sensoranordnung 30 ein einziges Sensorelement 32 aufweisen, wobei die beiden Sensorabschnitte 40, 44 durch räumlich getrennte Abschnitte des Sensorelements 32 gebildet sind. Alternativ jedoch nicht dargestellt ist auch möglich, dass die Sensoranordnung 30 zwei Sensorelemente 32 aufweist, wobei jedes der Sensorelemente 32 dann einen der beiden Sensorabschnitte 40, 44 bildet.

Eine Sensoroptik 34 sorgt dafür, dass das einlaufende Empfangslicht 22 für beide Sensorabschnitte 40, 44 entsprechend fokussiert ist. Wie dargestellt kann für beide Sensorabschnitte 40, 44 eine gemeinsame Sensoroptik 34 vorgesehen sein. Alternativ kann auch für jeden der beiden Sensorabschnitte 40, 44 eine eigene Sensoroptik 34 verbaut sein.

Während der Drehung der Sensoranordnung 30 (vgl. die beiden Teilfiguren A, B in Fig. 1) ermittelt der erste Sensorabschnitt 40 LiDAR-Daten 70 sowie der zweite Sensorabschnitt 44 Umgebungs-Daten 72, die durch die Auswerteeinheit 14 dann zu entsprechenden Eingangsbildern 60, 62 verarbeitet werden (vgl. Fig. 2). Beide Sensorabschnitte 40, 44 können einen optisch sensitiven Bereich aufweisen, der einem einzelnen Bildpunkt entspricht. In diesem Fall entsprechen die Eingangsbilder 60, 62 einer Linie in der Umgebung 200. Alternativ können die optisch sensitiven Bereiche auch als eine Spalte an Bildpunkten ausgebildet sein. In diesem Fall ergibt sich dann ein zweidimensionales Bild der Umgebung 200 als jeweiliges Eingangsbild 60, 62. In letzterer Konfiguration kann die Spalte an Bildpunkten bevorzugt parallel zur Drehachse 48 ausgerichtet sein.

Die beiden Sensorabschnitte 40, 44 sind in der Sensoranordnung 30 beabstandet zueinander angeordnet und bevorzugt getrennt voneinander auslesbar. Neben einem horizontalen Abstand können die beiden Sensorabschnitte 40, 44 zusätzlich auch parallel zur Drehachse 48 vertikal beanstandet in der Sensoranordnung 30 positioniert sein. Das Auslesen der Sensorabschnitte 40, 44 kann zeitgleich oder zeitlich versetzt erfolgen.

Insbesondere sind, wie in Fig. 1 dargestellt, die beiden Sensorabschnitte 40, 44 an unterschiedlichen Positionen bezüglich der Drehachse 48 angeordnet. Dargestellt ist eine Anordnung bezüglich der Drehachse 48 auf einer Seite der Drehachse 48, es ist jedoch auch eine Anordnung des ersten Sensorabschnitts 40 auf einer Seite, und des zweiten Sensorabschnitts 44 entsprechend auf der anderen Seite der Drehachse 48 denkbar.

Bedingt durch die beabstandete Anordnung weisen die beiden Sensorabschnitte 40, 44 auch unterschiedliche Blickrichtungen 50, 52 auf, entlang derer sich ein Empfangsbereich des jeweiligen Sensorabschnitts 40, 44 in der Umgebung 200 erstreckt. Bevorzugt kann ein Winkel Δα zwischen den Blickrichtungen zwischen 15° und 45° betragen.

Wie vorstehend bereits beschrieben, ist die Sensoranordnung 30 um die Drehachse 48 drehbar gelagert. Dadurch überstreichen die Blickrichtungen 50, 52 der beiden Sensorabschnitte 40, 44 in der Umgebung 200 unterschiedliche Sensorbereiche 42, 46. Bevorzugt sind die Blickrichtungen 50, 52 der beiden Sensorabschnitte 40, 44 quer zur Drehachse 48 ausgerichtet. In Fig. 1 ist in den Teilfiguren A, B die Sensoranordnung 30 in zwei verschiedenen Drehpositionen dargestellt. In einem nicht dargestellten Überlappungsbereich der beiden Sensorbereiche 42, 46 sind somit sowohl LiDAR-Daten 70 des ersten Sensorabschnitts 40 als auch Umgebungs-Daten 72 des zweiten Sensorabschnitts 44 vorhanden. Dieser Überlappungsbereich stellt einen Scanbereich der erfindungsgemäßen Scanvorrichtung 100 dar, in dem die allein basierend auf den LiDAR-Daten der LiDAR-Sensoreinheit 10 ermöglichte räumliche Vermessung der Umgebung 200 durch Berücksichtigung der durch den zweiten Sensorabschnitt 44 ermittelten Umgebungs-Daten 72 verbessert werden kann. Bevorzugt kann der Scanbereich zumindest 60° umfassen, besonders bevorzugt kann jedoch auch ein größerer Bereich, beispielsweise 180° oder sogar 360° durch den Scanbereich abgedeckt sein.

Die erfindungsgemäß ermöglichte Verbesserung der Vermessung der Umgebung 200 basiert insbesondere auf den wie voranstehend beschriebenen unterschiedlichen Blickrichtungen 50, 52 der beiden Sensorabschnitte 40, 44 bzw. auf den unterschiedlichen Positionen der Sensorabschnitte 40, 44. Ein mögliches Vorgehen für die entsprechende Auswertung ist in Fig. 2 gezeigt. Die Auswertung wird durch die Auswerteeinheit 14 vorgenommen, die entsprechend ausgebildet ist.

In Fig. 2 sind schematisch Eingangsbilder 60, 62 gezeigt, wobei das erste Eingangsbild 60 aus den LiDAR-Daten 70 des ersten Sensorabschnitts 40 gebildet ist und somit den durch den ersten Sensorabschnitt 40 überwachten Sensorbereich 42 abbildet. Entsprechend ist das zweite Eingangsbild 62 aus den Umgebungs-Daten 72 des zweiten Sensorabschnitts 44 gebildet und bildet den durch den zweiten Sensorabschnitt 44 überwachten Sensorbereich 46 ab. Deutlich erkennbar ist, dass beide Sensorabschnitte 40, 44 die in der Umgebung 200 vorhandenen Objekte 210, 212, 214 detektieren, durch ihre unterschiedliche Positionierung innerhalb der Sensoranordnung 30 jedoch bei unterschiedlichen Drehpositionen *φ* der Sensoranordnung 30. Im Wesentlichen ist der Unterschied hierbei durch den Winkel Δα zwischen den jeweiligen Blickrichtungen 50, 52 der Sensorabschnitte 40, 44 bestimmt. Jedoch stellt sich, insbesondere abhängig von einem Abstand des jeweiligen Objekts 210, 212, 214 zur Scanvorrichtung 100, ein zusätzlicher Versatz 56 ein. Dieser Versatz 56 ist umso größer, je näher das jeweilige Objekt 210, 212, 214 in der Umgebung 200 zur Scanvorrichtung 100 positioniert ist (vgl. Fig. 1).

Insbesondere aus diesem Versatz 56 können nun Stereo-3D-Daten 74, beispielsweise Stereo-Abstände von Objekten 210, 212, 214, ermittelt werden, die zu einer Verbesserung der räumlichen Vermessung der Umgebung 200, wie sie allein durch die LiDAR-Sensoreinheit 10 ermöglicht ist, herangezogen werden können. So können beispielsweise Werte von LiDAR-Abständen von Objekten 210, 212, 214, die allein basierend auf den durch die LiDAR-Sensoreinheit 10 ermittelten LiDAR-Daten 70 bestimmt sind, durch die nun zusätzlich verfügbaren Stereo-Abstände überprüft werden. Ein Überprüfen kann zum Beispiel eine Plausibilitätsprüfung, oder das Bilden eines, eventuell auch gewichteten, Mittelwerts sein. Ein durch die Auswerteeinheit 14 erzeugtes Ausgangsbild 64, das dem Überlapp der beiden Eingangsbilder 60, 62 und damit einem entsprechenden Überlapp der Sensorbereiche 42, 46 der beiden Sensorabschnitte 40, 44 entspricht, kann auf diese Weise eine durch die ermittelten Stereo-3D-Daten 74 verbesserte Vermessung der Umgebung 200 darstellen, beispielsweise in einem Ausgangsbild 64, das eine zweidimensionale Abbildung der Umgebung 200 basierend auf dem Eingangsbild 62, das aus den durch den zweiten Sensorabschnitt 44 ermittelten Umgebungs-Daten 72 gebildet ist, umfasst, die durch zusätzliche, beispielsweise numerische, Anzeige der Stereo-Abstände von Objekten 210, 212 ,214 ergänzt ist, also Tiefeninformationen enthalten kann, welche genauer als die Tiefeninformation der LiDAR-Daten 70 sein kann.

### Bezugszeichen

- 10: LiDAR-Sensoreinheit
- 12: Empfangseinheit
- 14: Auswerteeinheit

- 20: Sendelicht
- 22: Empfangslicht

- 30: Sensoranordnung
- 32: Sensorelement
- 34: Sensoroptik

- 40: erster Sensorabschnitt
- 42: Sensorbereich (erster Sensorabschnitt)
- 44: zweiter Sensorabschnitt
- 46: Sensorbereich (zweiter Sensorabschnitt)
- 48: Drehachse

- 50: Blickrichtung (erster Sensorabschnitt)
- 52: Blickrichtung (zweiter Sensorabschnitt)
- 54: Winkel Δα
- 56: Versatz

- 60: erstes Eingangsbild
- 62: zweites Eingangsbild
- 64: Ausgangsbild

- 70: LiDAR-Daten
- 72: Umgebungs-Daten
- 74: Stereo-3D-Daten

- 100: Scanvorrichtung

- 200: Umgebung

- 210: Objekt A
- 212: Objekt B
- 214: Objekt C

## Patentansprüche

1. Scanvorrichtung (100) für eine räumliche Vermessung einer Umgebung (200), aufweisend eine LiDAR-Sensoreinheit (10) mit einer Lichtquelle zum Aussenden von Sendelicht (20) in die Umgebung, (200) einer Empfangseinheit (12) zum Empfangen von in der Umgebung (200) remittierten und/oder reflektierten Sendelicht (20) als Empfangslicht (22) sowie einer Auswerteeinheit, (14) wobei die Auswerteeinheit (14) zum Auswerten der durch die Empfangseinheit (12) ermittelten LiDAR-Daten (70) für die räumliche Vermessung der Umgebung (200) ausgebildet ist,
**dadurch gekennzeichnet,**
**dass** die LiDAR-Sensoreinheit (10) eine um eine Drehachse (48) drehbar gelagerte optische Sensoranordnung (30) mit zwei Sensorabschnitten (40, 44) aufweist,
wobei die Sensorabschnitte (40, 44) zueinander beabstandet und bezüglich der Drehachse (48) an unterschiedlichen Positionen angeordnet sind, wobei ein erster der Sensorabschnitte (40) durch optisch sensitive Elemente der Empfangseinheit (12) gebildet ist und die LiDAR-Daten (70) ermittelt,
wobei ferner ein zweiter der Sensorabschnitte (44) optische Umgebungs-Daten (72) ermittelt,
und wobei die Auswerteeinheit (14) zum Auswerten der Umgebungs-Daten (72) ausgebildet ist, und weiter basierend auf den LiDAR-Daten (70) und den Umgebungs-Daten (72) zum Ermitteln von Stereo-3D-Daten (74) zur Verbesserung der räumlichen Vermessung der Umgebung (200) ausgebildet ist.

2. Scanvorrichtung (100) nach Anspruch 1,
**dadurch gekennzeichnet**,
die Auswerteeinheit (14) ausgebildet ist, die Verbesserung, insbesondere nur, dann vorzunehmen, wenn eine Signalstärke des Empfangslichts (22) und/oder ein Verhältnis eines Messsignals zum Rauschen des Empfangslichts (22) in der Empfangseinheit (12) der LiDAR-Sensoreinheit (10), einen vorbestimmten Schwellenwert unterschreitet, und/oder
wenn eine Signalstärke des Empfangslichts (22) in der Empfangseinheit (12) der LiDAR-Sensoreinheit (10), einen vorbestimmten Schwellenwert überschreitet, und/oder
wenn ein durch die LiDAR-Sensoreinheit (10) ermittelter LiDAR-Abstand und/oder ein in den Stereo-3D-Daten (74) enthaltener Stereo-Abstand einen vorbestimmten Abstandsschwellenwert unterschreitet.

3. Scanvorrichtung (100) nach Anspruch 1 oder 2,
**dadurch gekennzeichnet,**
**dass** jeweilige Blickrichtungen (50, 52) der beiden Sensorabschnitte (40, 44), entlang der der jeweilige Sensorabschnitt sensitiv ist, einen Winkel Δα (56), bevorzugt einen Winkel Δα (56) zwischen 15° und 45°, einschließen.

4. Scanvorrichtung (100) nach Anspruch 3,
**dadurch gekennzeichnet,**
**dass** die Blickrichtung (50, 52) wenigstens eines der Sensorabschnitte (40, 44) quer zur Drehachse (48) ausgerichtet ist, bevorzugt die Blickrichtungen (50, 52) beider Sensorabschnitte (40, 44) quer zur Drehachse (48) ausgerichtet sind.

5. Scanvorrichtung (100) nach einem der vorstehenden Ansprüche 1 bis 4, **dadurch gekennzeichnet,**
**dass** während der Drehbewegung der Sensoranordnung (30) die beiden Sensorabschnitte (40, 44) jeweils eine Vielzahl an Einzelaufnahmen als LiDAR-Daten (70) und Umgebungs-Daten (72) ermitteln, wobei die Auswerteeinheit (14) zum Erzeugen eines ersten Eingangsbild (60) aus den Einzelaufnahmen des ersten Sensorabschnitts (40) sowie zum Erzeugen eines zweiten Eingangsbild (62) aus den Einzelaufnahmen des zweiten Sensorabschnitts (44) ausgebildet ist,
und wobei die Auswerteeinheit (14) zum Erzeugen eines Ausgangsbilds (64) aus dem ersten Eingangsbild (60) und dem zweiten Eingangsbild (62) ausgebildet ist.

6. Scanvorrichtung (100) nach Anspruch 5,
**dadurch gekennzeichnet,**
**dass** das Ausgangsbild (64) die durch die ermittelten Stereo-3D-Daten (74) verbesserte Vermessung der Umgebung (200) umfasst, bevorzugt dass das Ausgangsbild (64) der durch die ermittelten Stereo-3D-Daten (74) verbesserte Vermessung der Umgebung (200) entspricht.

7. Scanvorrichtung (100) nach Anspruch 5 oder 6,
**dadurch gekennzeichnet,**
**dass** die Scanvorrichtung (100) eine mit der Auswerteeinheit (14) datenkommunizierende Ausgabeschnittstelle zum Ausgeben des ersten Eingangsbilds (60) und/oder des zweiten Eingangsbilds (62) und/oder des Ausgangsbilds (64) aufweist.

8. Scanvorrichtung (100) nach einem der vorstehenden Ansprüche 1 bis 7,
**dadurch gekennzeichnet,**
**dass** ein optisch sensitiver Bereich der beiden Sensorabschnitte (40, 44) jeweils einem einzelnen Bildpunkt entspricht.

9. Scanvorrichtung (100) nach einem der vorstehenden Ansprüche 1 bis 7, **dadurch gekennzeichnet,**
**dass** ein optisch sensitiver Bereich der beiden Sensorabschnitte (40, 44) jeweils einer Spalte an Bildpunkten entsprechen, wobei die Bildpunkte in der Spalte entlang einer Längserstreckung angeordnet sind, und wobei bevorzugt die Längserstreckung der jeweiligen Spalte parallel zur Drehachse (48) der Sensoranordnung (30) ausgerichtet ist.

10. Scanvorrichtung (100) nach einem der vorstehenden Ansprüche 1 bis 9, **dadurch gekennzeichnet,**
**dass** der zweite Sensorabschnitt (44) als Bestandteil einer der folgenden Sensoreinheiten ausgebildet ist:
- Bestandteil einer LiDAR-Sensoreinheit
- Bestandteil einer Hintergrundlichtmesseinheit

11. Scanvorrichtung (100) nach einem der vorstehenden Ansprüche 1 bis 10,
**dadurch gekennzeichnet,**
**dass** die Sensorabschnitte (40, 44) parallel zur Drehachse (48) der Sensoranordnung (30) vertikal beabstandet angeordnet sind.

12. Scanvorrichtung (100) nach einem der vorstehenden Ansprüche 1 bis 11, **dadurch gekennzeichnet,**
**dass** die Sensoranordnung (30) ein optisches Sensorelement (32) aufweist, wobei die Sensorabschnitte (40, 44) als geometrisch beabstandete Abschnitte des Sensorelements (32) ausgebildet sind, oder
**dass** die Sensoranordnung (30) zwei geometrische getrennte optische Sensorelemente (32) aufweist, wobei jedes Sensorelement (32) einen der Sensorabschnitte (40, 44) umfasst.

13. Scanvorrichtung (100) nach einem der vorstehenden Ansprüche 1 bis 12, **dadurch gekennzeichnet,**
**dass** die Sensoranordnung (30) eine gemeinsame Sensoroptik (34) für die Sensorabschnitte (40, 44) aufweist, oder
**dass** die Sensoranordnung (30) für jeden der Sensorabschnitte (40, 44) eine eigene Sensoroptik (34) aufweist.

14. Scanvorrichtung (100) nach einem der vorstehenden Ansprüche 1 bis 13, **dadurch gekennzeichnet,**
**dass** die Sensorabschnitte (40, 44) auf verschiedenen Seiten der Drehachse (48) positioniert sind, bevorzugt dass die Sensorabschnitte (40, 44) in Bezug auf die Drehachse (48) symmetrisch positioniert sind.

15. Verfahren für eine räumliche Vermessung einer Umgebung (200) durch die Scanvorrichtung (100) gemäß einem der vorstehenden Ansprüche, **dadurch gekennzeichnet,**
**dass** durch die LiDAR-Sensoreinheit (10) der Scanvorrichtung (100) LiDAR-Daten (70) erfasst und basierend auf diesen LiDAR-Daten (70) eine räumliche Vermessung der Umgebung (200) vorgenommen wird,
wobei zusätzlich durch den zweiten Sensorabschnitt (44) der Scanvorrichtung (100) optische Umgebungs-Daten (72) der Umgebung (200) erfasst werden und durch die Auswerteeinheit (14) der Scanvorrichtung (100) basierend auf den LiDAR-Daten (70) und diesen zusätzlichen Umgebungs-Daten (72) des zweiten Sensorabschnitts (44) Stereo-3D-Daten (74) ermittelt werden,
und wobei durch die Auswerteeinheit (14) die Vermessung der Umgebung (200) durch Berücksichtigung dieser Stereo-3D-Daten (74) verbessert wird.
